Europäisches Patentamt

European Patent Office

Office européen des brevets

(11) Veröffentlichungsnummer: **0 204 914**

A1

(12) # EUROPÄISCHE PATENTANMELDUNG

(21) Anmeldenummer: 86104756.1

(22) Anmeldetag: 08.04.86

(51) Int. Cl.⁴: **B 23 D 21/04**

(30) Priorität: 13.05.85 DE 3517256

(43) Veröffentlichungstag der Anmeldung:
17.12.86 Patentblatt 86/51

(84) Benannte Vertragsstaaten:
AT BE CH DE FR GB IT LI NL SE

(71) Anmelder: Kupfer, Karlheinz
Im Valtert 2
D-6951 Obrigheim(DE)

(72) Erfinder: Lörsch, Lorenz
Kriegs-Strasse 6
D-6900 Heidelberg(DE)

(74) Vertreter: Hach, Hans Karl, Dr.
Tarunstrasse 23
D-6950 Mosbach-Waldstadt(DE)

(54) Vorrichtung zum Abtragen einer Schweissnaht.

(57) Zum Abtragen einer Schweißnaht (11), die sich auf dem Umfang eines zylindersymmetrischen Leitungsabschnittes (13) erstreckt, wird ein aus zwei Segmenten (21, 22) bestehender Gleitring (20) auf den Leitungsabschnitt gesetzt. Dieser Gleitring weist eine Außennut (67) auf, in der sich ein aus zwei Segmenten (68, 69) zusammengesetzter Zahnkranz (65) dreht, der einen Schneidstichelhalter (80) mitnimmt. Der Zahnkranz wird angetrieben von einem am Gleitring befestigten Antrieb (60).

Fig.2

VORRICHTUNG ZUM ABTRAGEN EINER SCHWEISSNAHT

Die Erfindung betrifft eine Vorrichtung zum Abtragen einer Schweißnaht, die sich koaxial außen auf dem Umfang eines kreisrunden zylindersymmetrisch stationär verlegten Leitungsabschnittes erstreckt.

Eine bekannte Vorrichtung zu diesem Zweck besteht aus einer Handbohrmaschine mit eingesetzter Schleifscheibe und die Schweißnaht wird mit der freihändig geführten Schleifscheibe abgeschliffen. Das ist mühsam und führt auch nicht zu einem sauberen Abtrag, besonders wenn benachbarte Einbaugegenstände dicht angrenzen und dadurch die Handhabung der Schleifscheibe behindern.

In Leitungssystemen, für die besondere Sicherheitsvorschriften zu beachten sind, wie es zum Beispiel bei Kernkraftwerken der Fall ist, werden zu Inspektionszwecken solche Schweißnähte abgetragen. Da im Anschluß an die Inspektion die betreffende Stelle wiederhergestellt werden soll, ist es wünschenswert, die Schweißnaht so abzutragen, daß sie anschließend wieder aufgetragen werden kann. Das ist aber in der Regel nicht möglich, wenn sie wie eingangs dargelegt unsauber von Hand abgetragen worden ist.

Solche Leitungssysteme sind oft auch sehr gedrängt gebaut, so daß der Zugang zu der Schweißnaht in einigen Umfangsbereichen sehr eng sein kann.

Es ist deshalb Aufgabe der Erfindung, eine Vorrichtung der eingangs genannten Art zu schaffen, die es gestattet, eine Schweißnaht, auch dann wenn Umfangsbereiche sehr eng an benachbarte Einbauten angrenzen, sauber und mit möglichst geringem Aufwand abzutragen.

Die Erfindung ist dadurch gekennzeichnet, daß ein Gleit - ring vorgesehen ist, der um den Leitungsabschnitt bündig paßt und auf dem Leitungsabschnitt festschraubbar ist, daß ein Zahnkranz vorgesehen ist, der Außenverzahnung hat und in einer Außennut des Gleitringes koaxial gleitend geführt ist, daß ein Antrieb vorgesehen ist, der am Gleitring befestigbar ist und ein mit der Außenverzahnung des Zahnkranzes kämmendes Antriebsritzel antreibt, daß ein Schneidstichelhalter vorgesehen ist, der am Zahnkranz befestigt ist und eine Schneidstichelaufnahme aufweist, die radial einwärts gerichtet ist, und daß der Gleitring und der Zahnkranz aus je zwei etwa gleich großen Segmenten bestehen, die miteinander verbindbar sind.

Die Vorrichtung ist wegen der bündigen Passung auf den Umfang des betreffenden Leitungsabschnittes hinsichtlich ihrer Abmessungen eingerichtet. Das macht für verschieden starke Leitungsabschnitte entsprechend verschieden dimensionierte Vorrichtungen erforderlich, die hinsichtlich ihrer für die bündige Passung maßgeblichen Dimensionen, also in erster Linie des Innendurchmessers, den Abmessungen des Leitungsabschnittes entsprechend bemessen sind. Da die in Frage stehenden Leitungsabschnitte jedoch nicht in beliebigen Größen zur Verfügung stehen, sondern auf diskrete Größen genormt sind, werden auch nur wenige verschiedene Vorrichtungen benötigt, um alle in der Praxis in Frage stehenden Leitungsabschnitte bearbeiten zu können.

Die Vorrichtung umgibt mit ihrem Gleitring und Zahnkranz vollständig die Schweißnaht und bei umlaufendem Zahnkranz kann der Schneidstichel die Schweißnaht sauber abtragen. Ausgenommen in dem relativ engen Umfangsbereich, in dem sich der Antrieb befindet, kann die Vorrichtung leicht so ausgebildet werden, daß sie sich eng an den Umfang des Leitungsabschnittes anschmiegt, also Platz findet auch in engen Zwischenräumen gegenüber benachbarten Einbauten.

Die Vorrichtung kann auch leicht auf den Leitungsabschnitt aufgesetzt werden, weil sie, soweit sie den Leitungsabschnitt umgibt, teilbar ist in die jeweils vorgesehenen zwei Segmente, so daß sie segmentweise um den Leitungsabschnitt gesetzt werden kann und dann durch Verbinden der Segmente betriebsfertig wird.

Insbesondere bei Leitungssystemen, die den eingangs erwähnten besonderen Sicherheitsvorschriften unterliegen, werden die aneinandergrenzenden Stirnflächen von Flanschverbindungen außen zur zusätzlichen Absicherung der Dichtung mit einer Schweißnaht umgeben. Diese Schweißnaht, die dann auf dem Umfang des Trennspaltes zwischen den Flanschen liegt, muß, wenn man die Flanschverbindung zu Inspektionszwecken öffnen will, abgetragen werden und soll anschließend auch wieder erneuert werden. Diesen Bedingungen wird eine Weiterbildung der Erfindung gerecht, die sich durch besonders einfache Ausgestaltung und Handhabung auszeichnet und die dadurch gekennzeichnet ist, daß der Gleitring den einen Flansch an seinem Umfang krallenförmig umfassend ausgebildet ist, und daß zum Festschrauben des Gleitringes im Gleitring eingeschraubte Klemmschrauben vorgesehen sind, die auf die der Schweißnaht abgekehrte Stirnfläche des Flansches gerichtet sind. Dabei ist vorzugsweise zur Verdrehungssicherung des Gleitrings ein zur Achse der Schweißnaht paralleles Gewindeloch im Gleitring vorgesehen, das mit einem für die Verschraubung des Flansches vorgesehenen Durchbruch des Flansches in Flucht gebracht wird, und in das Gewindeloch des Gleitringes ist ein Gewindebolzen eintreibbar, der sich mit seinem gewindefreien Ende im Durchbruch des Flansches verkeilt.

Bei glatten Leitungsabschnitten empfiehlt sich eine andere Ausgestaltung der Erfindung, die dadurch gekennzeichnet ist, daß zum Festlegen des Gleitrings ein Flanschring vorgesehen ist, der bündig um den Leitungsabschnitt paßt, daß der Flanschring mit dem Gleitring durch Schrauben verschraubbar ist, die auf den Umfang verteilt und zur Schweißnahtachse achsparallel angeordnet sind, daß der Flanschring aus zwei etwa gleich großen Segmenten besteht, die miteinander verbindbar sind und bei angeschraubtem Gleitring gegenüber den Segmenten des Gleitrings zur Überlappung versetzt sind. Dabei sind vorzugsweise zum Festlegen des Flanschringes und des Gleitringes am Leitungsabschnitt radial gerichtete Schrauben auf dem Umfang verteilt in mindestens einen der beiden Ringe eingeschraubt, die durch Einschrauben mit der Wand des Leitungsabschnittes verspannbar sind.

Die Erfindung wird nun anhand der beigefügten Zeichnung näher erläutert.

In der Zeichnung zeigt:

Figur 1   von der Seite gesehen, teilweise aufgebrochen, eine Vorrichtung zum Abtragen
        einer Schweißnaht, die zwischen den Flanschen einer Flanschverbindung liegt,

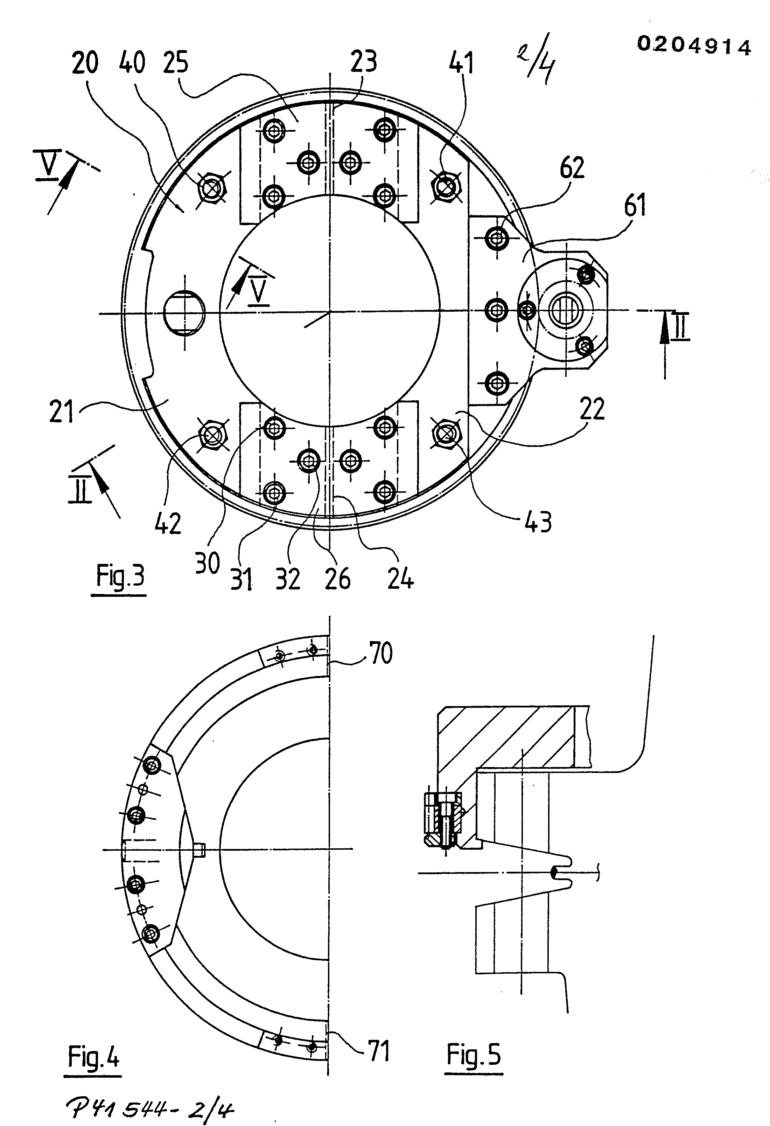

Figur 2   die Vorrichtung aus Figur 1 im Schnitt II
        aus Figur 3,

Figur 3   die Ansicht gemäß dem Pfeil III aus Figur 1,

Figur 4   die Ansicht IV aus Figur 2, jedoch nur
        die linke Hälfte,

Figur 5   den Teilschnitt V aus Figur 3,

Figur 6   im Querschnitt VI aus Figur 7 eine Vorrichtung zum Abtragen einer Schweißnaht,
        die sich auf einem glatten Leitungsabschnitt erstreckt,

Figur 7   die Ansicht VII aus Figur 6, und

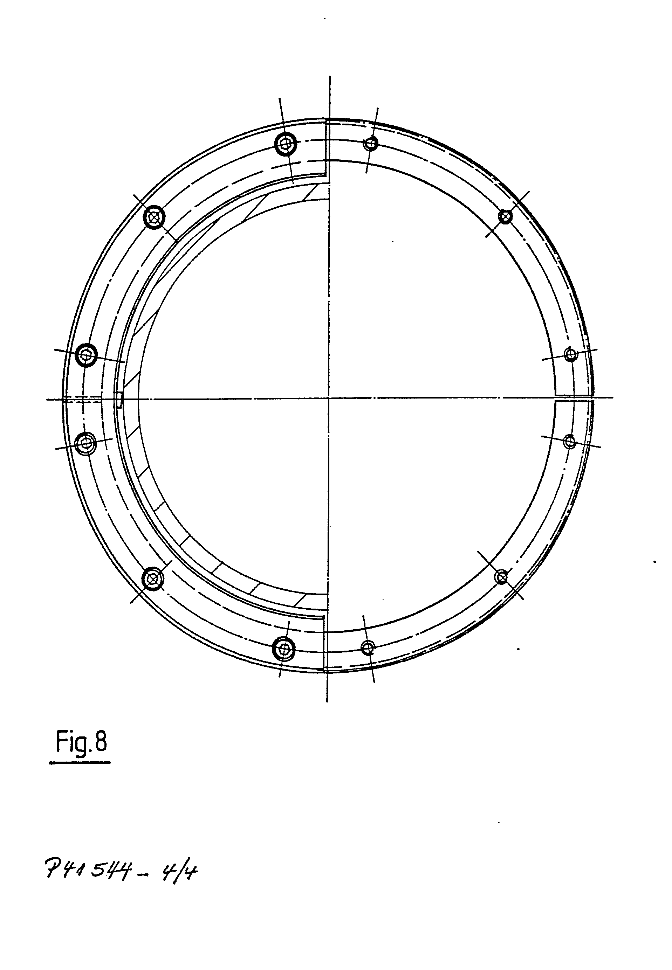

Figur 8   die Ansicht VIII aus Figur 6.

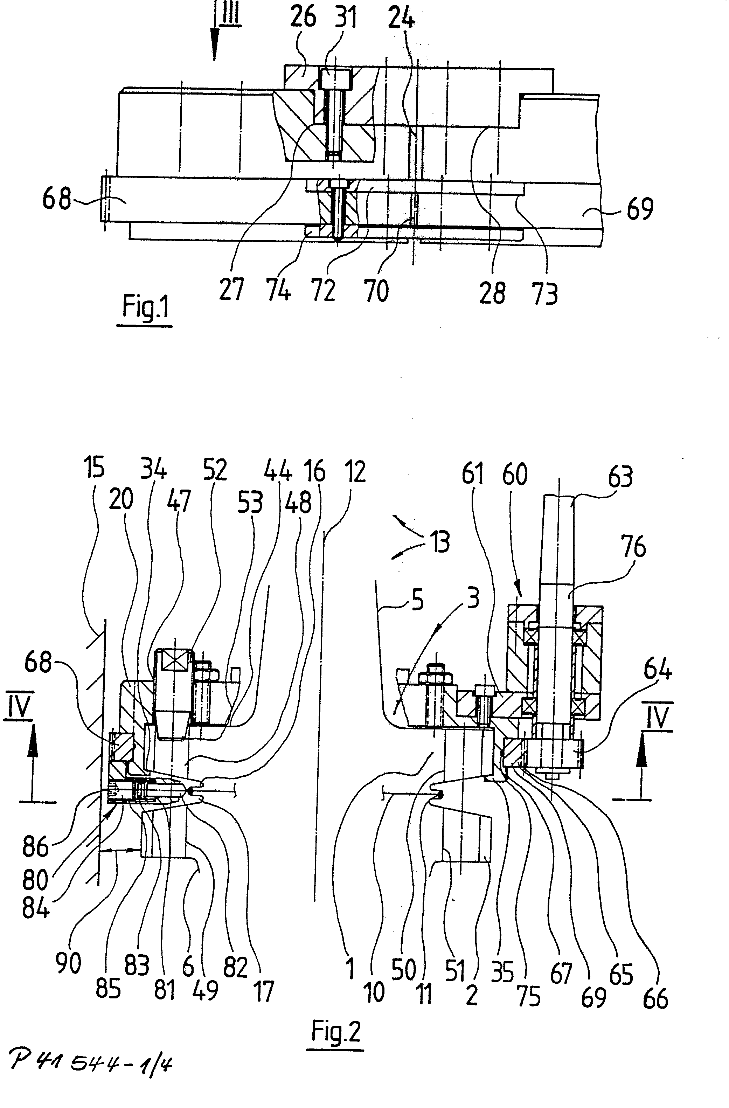

In der Zeichnung sind mit 1 und 2 zwei Flansche einer
Flanschverbindung 3 bezeichnet. Die Flanschverbindung
dient zum Aneinanderschließen der Leitungsstücke 5 und 6.
Die Flansche 1 und 2 sind mit insgesamt zwölf auf dem
Umfang verteilt angeordneten Dehnschrauben verschraubt.
Diese Dehnschrauben werden abgeschraubt und herausgenommen, ehe die Vorrichtung angesetzt wird. Deshalb sind
diese Dehnschrauben in der Zeichnung nicht sichtbar. Es
sind aber in Figur 2 die Durchbrüche 48, 49, 50, 51 für
solche Dehnschrauben sichtbar.

Die Flanschverbindung 3 gehört zu einem allgemein mit 13
bezeichneten Leitungsabschnitt, der, abgesehen von den
Schraubverbindungen, kreisrund und zylindersymmetrisch zur
Symmetrieachse 12 ist und im allgemeinen stationär verlegt
ist. In verlegtem Zustand können sich in unmittelbarer
Nachbarschaft stationäre Einrichtungen befinden, zum Beispiel die Wand 15.

Der Leitungsabschnitt 13 gehört zu einem Sicherheitssystem
in einem Kernkraftwerk und deshalb ist der Trennspalt 10
zwischen den Flanschen 1 und 2 noch zusätzlich gesichert
durch eine außen auf den Umfang aufgesetzte Schweißnaht
11. Will man die Flanschverbindung zum Beispiel zu Inspektionszwecken lösen, dann muß die Schweißnaht 11 abgetragen
werden. Will man nach der Inspektion den Leitungsabschnitt
wiederverwenden, dann muß nach Verschließen der Flanschverbindung eine neue Schweißnaht entsprechend der Schweißnaht 11 aufgetragen werden, und das geht nur, wenn die zuvor aufgetragene Schweißnaht sauber abgetragen wurde. Ist
das nicht der Fall, dann muß der ganze Leitungsabschnitt
bei jeder Inspektion ausgewechselt werden, allein wegen
der Notwendigkeit, eine neue der Schweißnaht 11 entsprechende Schweißnaht aufzusetzen. Die nun zu beschreibende
Vorrichtung gestattet es, diese Schweißnaht 11 so sauber
abzutragen, daß eine neue Schweißnaht anschließend an
dieselbe Stelle wieder aufgesetzt werden kann, mithin also
die Flanschverbindung wiederverwendet werden kann. Um dies
zu erleichtern, sind in unmittelbarer Nachbarschaft des
Trennspaltes zwei Ringwülste 16, 17 in der Flanschverbindung vorgesehen, die beim Abtragen der Schweißnaht ein
Stück mitabgetragen werden können.

Die Anwendung der zu beschreibenden Vorrichtung ist nicht
auf Flanschverbindungen mit solchen Wülsten beschränkt,
aber diese Wülste erweisen sich in Verbindung mit der Vorrichtung als vorteilhaft.

Die Vorrichtung besteht aus einem Gleitring 20, der aus
zwei gleich großen Segmenten 21, 22 besteht. Der Gleitring
besteht vorzugsweise aus Messing. Die beiden Segmente 21,
22 erstrecken sich um je 180 Grad und stoßen entlang der
Trennlinien 23, 24 aneinander. Die Trennlinien 23, 24 sind überdeckt von Laschen 25, 26, die in Versenkungen passen.
Die Versenkungen 27, 28 für die Lasche 26 sind in Figur 1
sichtbar. Jede der Laschen 25, 26 ist mit je drei
Schrauben mit jedem der Segmente 21, 22 verschraubt, zum
Beispiel die Lasche 26 mit den Schrauben 30, 31, 32 an dem
Segment 21. Zum Abnehmen des Gleitrings 20 werden die
Laschen gelöst.

Der Gleitring 20 umgreift mit Krallen 34, 35 den Umfang
des angrenzenden Flansches 1 und paßt bündig auf den
Flansch. In den Gleitring sind auf den Umfang verteilt
vier Schrauben 40, 41, 42, 43 eingeschraubt, die sich
parallel zur Achse 12 erstrecken und gegen die der
Schweißnaht 11 abgekehrte Stirnfläche 44 verspannt sind,
wodurch der Gleitring fest auf dem Flansch verklemmt wird.
Zur zusätzlichen Verdrehungssicherung ist im Gleitring 20
ein Gewindeloch 47 vorgesehen, das mit einem Durchbruch 48
durch die Flanschverschraubung in Flucht gebracht wird. In
das Gewindeloch 47 ist ein Gewindebolzen 52 eingeschraubt,
der sich mit seinem gewindefreien Ende 53 in dem Durchbruch 48 verkeilt.

Am Umfang des Gleitringes 20 ist ein allgemein mit 60 bezeichneter Antrieb befestigt. Dieser Antrieb weist einen
Flanschvorsprung 61 auf, der mit dem Gleitring 20 durch
Schrauben, zum Beispiel die Schraube 62, verschraubt ist.
Der Antrieb weist eine achsparallel zur Achse 12 drehbar
gelagerte Antriebsspindel 76 auf, an deren rückwärtiges
Ende 63 ein Antriebsmotor, zum Beispiel eine Handbohrmaschine, gekuppelt werden kann. Auf der Antriebsspindel 76
sitzt ein Antriebsritzel 64. Dieses Antriebsritzel 64
kämmt mit der Außenverzahnung 66 eines Zahnkranzes 65. Der
Zahnkranz 65 ist gleitend geführt in einer Außennut 67 des
Gleitrings 20. Der Zahnkranz 65 erstreckt sich, ebenso wie
der Gleitring 20, koaxial zur Achse 12.

Der Zahnkranz 65 besteht aus zwei Segmenten 68, 69, die sich jeweils über 180 Grad erstrecken. Diese Segmente stoßen entlang der Trennlinien 70, 71 aneinander. Auf dem Zahnkranz 65 sitzen zwei in Versenkungen eingelassene Laschen, von denen die eine Lasche 72 in Figur 1 sichtbar ist. Die zugehörige Versenkung ist mit 73 bezeichnet. Auf der jeweils gegenüberliegenden Seite sitzen zwei weitere Laschen, von denen die Lasche 74 in Figur 1 sichtbar ist. Die Laschen 72 und 74 sind miteinander verschraubt und halten die Segmente 68, 69 über der Trennlinie 70 zusammen. Entsprechend sind die Segmente auch an der Trennlinie 71 verschraubt. Auf diese Weise ist es möglich, den Zahnkranz in die Außennut 67 des bereits aufgesetzten Gleitringes einzusetzen. Im Boden der Außennut 67 ist eine Schmierrinne 75 vorgesehen. Der Zahnkranz kann sich gleitend in der Außennut um die Achse 12 drehen und wird zu diesem Zweck von dem Ritzel 64 angetrieben.

An dem Segment 68 ist in der Mitte dieses Segmentes ein Schneidstichelhalter 80 montiert, der eine Aufnahme 81 für einen Schneidstichel 82 aufweist. Die Schneidstichelaufnahme 81 ist radial einwärts gerichtet und so bemessen, daß der Schneidstichel bei montierter Vorrichtung mittig auf die Schweißnaht 11 zugerichtet ist. Der Schneidstichel ist in radialer Richtung beweglich gelagert und steht unter der Druckbelastung einer Druckfeder 83, die ihn mit Federkraft gegen die Schweißnaht 11 preßt. Das Gegenlager 84 für die Druckfeder 83 kann von außen in radialer Richtung nachgedreht werden. Das Ritzel 64 ist zu diesem Zweck mittels Gewinde im Gehäuse 85 des Schneidstichelhalters gelagert und weist an seinem rückwärtigen Ende eine Sechskantausnehmung 86 für einen Inbusschlüssel auf.

Wenn die Flanschverbindung 3 gelöst werden soll, werden zunächst die Dehnschrauben herausgeschraubt, dann wird der Gleitring 20 aufgesetzt, dann wird der Zahnkranz mit dem Schneidstichelhalter eingesetzt und der Antrieb 60 angeschraubt. Dann wird der Schneidstichel einjustiert und der
Antrieb in Betrieb gesetzt. Der Schneidstichel läuft dann
um die Achse 12 um und spant die Schweißnaht 11 ab. Ist
das geschehen, dann wird die Vorrichtung wieder abgebaut.
Die Flanschverbindung 3 kann nun geöffnet werden. Wird sie
wieder geschlossen, dann kann eine neue Schweißnaht auf
die Trennlinien 23, 24 aufgeschweißt werden, weil die ursprüngliche Schweißnaht 11 durch die Vorrichtung sauber
abgetragen wurde.

Bemerkenswert ist, daß die Vorrichtung mit ihren umlaufenden Teilen in radialer Richtung nur sehr wenig Platz erfordert, so daß ein relativ schmaler Spalt gemäß dem Doppelpfeil 90 gegenüber der Wand 15 oder anderen angrenzenden Teilen für den Einbau genügt. Es muß nur an einer
Seite Platz für den Antrieb vorhanden sein und dazu genügt
ein sehr schmaler Umfangsbereich.

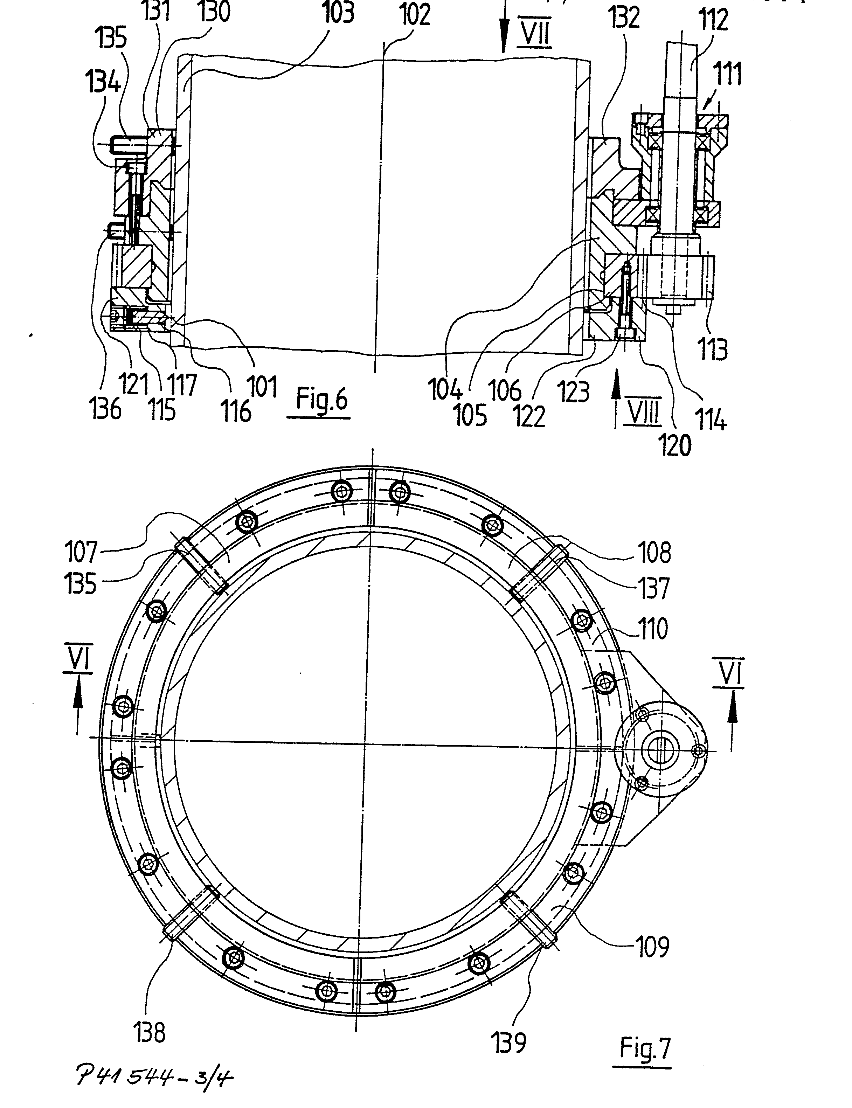

Das zweite Ausführungsbeispiel dient zum Abtragen der
Schweißnaht 101, die sich auf einem glatten zur Achse 102
koaxialen Leitungsabschnitt 103 erstreckt. Die Vorrichtung
besteht aus einem vorzugsweise aus Messing bestehenden
Gleitring 104, der eine Außennut 105 aufweist, in der ein
Zahnkranz 106 drehbar gelagert ist. Der Gleitring 104 paßt
bündig auf den Leitungsabschnitt 103. Der Gleitring 104
und der Zahnkranz 106 bestehen aus je zwei Segmenten, und
zwar der Gleitring 104 aus den Segmenten 107, 108 und der
Zahnkranz 106 aus den Segmenten 109, 110. Am Gleitring 104
ist der Antrieb 111 befestigt, dessen Antriebsspindel 112
das Antriebsritzel 113 treibt, das mit der Außenverzahnung
114 des Zahnkranzes 106 kämmt. Am Zahnkranz 106 ist ein
Schneidstichelhalter 115 befestigt, dessen Schneidstichelaufnahme 117 mit dem Schneidstichel 116 radial auf die
Schweißnaht 101 gerichtet ist. Der Antrieb 111 und der
Schneidstichelhalter 115 sind genauso ausgebildet wie bei dem ersten Ausführungsbeispiel, der Schneidstichelhalter
115 ist jedoch in einen Flanschring 120 eingesetzt. Dieser
Flanschring besteht aus zwei Segmenten 121, 122, die sich
jeweils über den halben Umfang erstrecken. Diese beiden
Segmente 121, 122 sind gegenüber den Segmenten 109, 110
des Zahnkranzes um 90 Grad versetzt verschraubt. Eine
dafür vorgesehene Schraube ist in Figur 6 sichtbar und mit
123 bezeichnet.

Mit 130 ist ein weiterer Flanschring bezeichnet, der aus
zwei Segmenten 131, 132 besteht und bündig auf den Leitungsabschnitt 103 paßt. Die beiden Segmente 131, 132
erstrecken sich über je den halben Umfang und sind
gegenüber den Segmenten 107, 108 des Gleitringes um 90
Grad versetzt verschraubt. Die Schrauben sind auf den Umfang verteilt, eine dafür vorgesehene Schraube ist in
Figur 6 sichtbar und mit 134 bezeichnet. Der Flanschring
130 ist, ebenso wie der Gleitring 104, durch radial gerichtete Schrauben, die auf den Umfang verteilt sind und
eingeschraubt gegen den Leitungsabschnitt 103 gepreßt sind
verspannt. Zwei solche Schrauben sind in Figur 6 sichtbar
und mit 135, 136 bezeichnet. Die in den Flanschring 130
eingeschraubten Schrauben 135, 137, 138, 139 sind in Figur
7 sichtbar.

Durch den gegenüber dem ersten Ausführungsbeispiel zusätzlich vorgesehenen Flanschring 130 wird der Gleitring 104
auf dem Umfang des Leitungsabschnittes 103 festgelegt. Die
Vorrichtung wird montiert und betrieben entsprechend wie
bei dem ersten Ausführungsbeispiel.

Zunächst werden der Flanschring 130 und der Gleitring 104
aus ihren jeweils zwei Segmenten zusammengesetzt und am
Leitungsabschnitt 103 verspannt. Dann wird der Zahnkranz
106 mit dem Flanschring 120 aus ihren jeweils zwei Segmenten angesetzt und dann wird der Antrieb 111 angeschraubt.

Nun kann der Schneidstichel 116 eingestellt werden und die
Vorrichtung in Betrieb genommen werden. Ist die Schweißnaht abgetragen, dann kann die Vorrichtung von dem Leitungsabschnitt wieder abgenommen werden. Statt eine
Schweißnaht abzutragen kann man natürlich auch eine Kerbe
in den Leitungsabschnitt eindrehen oder eine andere Erhebung abdrehen.

Dieses zweite Ausführungsbeispiel bietet für einen glatten
Leitungsabschnitt die entsprechenden Vorteile wie das
erste Ausführungsbeispiel, insbesondere ist es in beengten
räumlichen Gegebenheiten einsetzbar, weil es am Umfang des
Leitungsabschnittes nur wenig Platz benötigt, ausgenommen
einen sehr kleinen Umfangsabschnitt für den Antrieb.

P 41 544
**0204914**

P a t e n t a n s p r ü c h e :

1. Vorrichtung zum Abtragen einer Schweißnaht, die sich koaxial außen auf dem Umfang eines kreisrunden zylinder-symmetrisch stationär verlegten Leitungsabschnittes er-streckt, dadurch gekennzeichnet,

daß ein Gleitring ( 20, 104 ) vorgesehen ist, der um den Leitungsabschnitt ( 13, 103 ) bündig passt und auf dem Leitungsabschnitt festschraubbar ist,

daß ein Zahnkranz ( 65, 106 ) vorgesehen ist, der Außenverzahnung hat und in einer Außennut ( 67, 105 ) des Gleitringes koaxial gleitend geführt ist,

daß ein Antrieb ( 60, 111 ) vorgesehen ist, der am Gleitring befestigbar ist und ein mit der Außenverzahnung des Zahnkranzes kämmendes Antriebsritzel ( 64, 113 ) antreibt,

daß ein Schneidstichelhalter ( 80, 115 ) vorgesehen ist, der am Zahnkranz befestigt ist und eine Schneidstichelaufnahme ( 81, 117 ) aufweist, die radial einwärts gerichtet ist und,

daß der Gleitring und der Zahnkranz aus je zwei etwa gleich großen Segmenten ( 21,22,68,69,107-110 ) bestehen, die miteinander verbindbar sind.

2. Vorrichtung zum Abtragen einer Schweißnaht die auf dem Umfang des Trennspaltes zwischen den Flanschen einer Flanschverbindung liegt nach Anspruch 1, dadurch gekennzeichnet,

daß der Gleitring ( 20 ) den einen Flansch ( 1 ) an seinem Umfang krallenförmig umfassend ausgebildet ist, und

daß zum Festschrauben des Gleitringes im Gleitring eingeschraubte Klemmschrauben ( 40-43 ) vorgesehen sind, die auf die der Schweißnaht ( 11 ) abgekehrte Stirnfläche ( 44 ) des Flansches gerichtet sind.

3. Vorrichtung nach Anspruch 2, dadurch gekennzeichnet,

daß zur Verdrehungssicherung des Gleitrings ein zur Achse ( 12 ) der Schweißnaht paralleles Gewindeloch ( 47 ) im Gleitring vorgesehen ist, das mit einem für die Verschraubung des Flansches vorgesehenen Durchbruch ( 48 ) des Flansches in Flucht gebracht wird, und

daß in das Gewindeloch des Gleitringes ein Gewindebolzen ( 52 ) eintreibbar ist, der sich mit seinem gewindefreien Ende ( 53 ) im Durchbruch des Flansches verkeilt.

4. Vorrichtung zum Abtragen einer Schweißnaht, die sich auf einem glatten Leitungsabschnitt erstreckt nach Anspruch 1, dadurch gekennzeichnet,

daß zum Festlegen des Gleitrings ( 104 ) ein Flanschring ( 130 ) vorgesehen ist, der bündig um den Leitungsabschnitt ( 103 ) paßt,

daß der Flanschring mit dem Gleitring durch Schrauben ( 134 ) verschraubbar ist, die auf den Umfang verteilt und zur Schweißnahtachse ( 102 ) achsparallel angeordnet sind,

daß der Flanschring aus zwei etwa gleich großen Segmenten ( 131, 132 ) besteht, die miteinander verbindbar sind und bei angeschraubtem Gleitring gegenüber den Segmenten ( 107, 108 ) des Gleitrings zur Überlappung versetzt sind.

5. Vorrichtung nach Anspruch 4, dadurch gekennzeichnet,

daß zum Festlegen des Flanschringes ( 130 ) und des Gleitrings ( 104 ) am Leitungsabschnitt ( 103 ) radial gerichtete Schrauben ( 135, 136 ) auf dem Umfang verteilt in mindestens einen der beiden Ringe ( 104, 130 ) eingeschraubt sind, die durch Einschrauben mit der Wand des Leitungsabschnittes verspannbar sind.

6. Vorrichtung nach einem der vorhergehenden Ansprüche, dadurch gekennzeichnet,

daß der Gleitring ( 20, 104 ) aus Messing besteht.

Fig.1

Fig.2

P 41 544 - 1/4

Fig.3

Fig.4

Fig.5

Fig.6

Fig.7

Fig.8

P41544 - 4/4

Europäisches
Patentamt

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| Y | DE-A-2 253 058   (KERNKRAFTWERK OBRIGHEIM GMBH)<br>* Seite 2, letzter Absatz;  Seite 5, Zeile 10 - Seite 7; Figuren 1, 2 * | 1 | B 23 D   21/04 |
| A | | 2 | |
| | --- | | |
| Y | US-A-1 985 541   (HOEFER)<br>* Anspruch 1; Figuren 2, 4, 6 * | 1 | |
| A | | 5 | |
| | --- | | |
| A | US-A-3 253 336   (BROWN)<br>* Anspruch 1; Figur 4 * | 1 | |
| | --- | | RECHERCHIERTE SACHGEBIETE (Int Cl 4) |
| A | US-A-2 672 682   (STUDEBAKER et al.)<br>* Anspruch; Figur 3 * | 1,5 | B 23 B   5/14<br>B 23 D   21/00<br>B 23 D   79/02 |
| | --- | | |
| A | US-A-4 213 357   (LIVELY et al.)<br>*  Spalte 2, Zeilen 5-37; Figuren 1, 4 * | 1 | |
| | --- | | |
| A | US-A-3 431 646   (YOUNG)<br>* Anspruch 1; Figuren 2-5 * | 1 | |
| | ---            -/- | | |

Der vorliegende Recherchenbericht wurde für alle Patentansprüche erstellt

| Recherchenort<br>BERLIN | Abschlußdatum der Recherche<br>08-08-1986 | Prüfer<br>MARTIN A E W |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument

EPA Form 1503 03 82

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 548 063  (MOLINA AGUILAR)<br>* Anspruch 3; Figur 1 * | 1 | |
| | ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| BERLIN | 08-08-1986 | MARTIN A E W |

KATEGORIE DER GENANNTEN DOKUMENTE
X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E · älteres Patentdokument, das jedoch erst am oder nach dem Anmeldedatum veröffentlicht worden ist
D : in der Anmeldung angeführtes Dokument ·
L : aus andern Gründen angeführtes Dokument

—

& : Mitglied der gleichen Patentfamilie, übereinstimmendes Dokument

EPA Form 1503 03 82